# EUROPEAN PATENT APPLICATION

(11) **EP 4 555 853 A1**
(43) Date of publication of application: **21.05.2025**
(21) Application number: 24213093.8
(22) Date of filing: 14.11.2024
(51) Int. Cl.: A01G 9/22, F16L 3/12, E06B 9/06

(54) **DEVICE FOR COUPLING DRIVE MEANS TO A SCREEN PROFILE IN A SCREEN ASSEMBLY**

(30) Priority: 15.11.2023 NL 2036274
(71) Applicant: Van Der Valk Systemen B.V., 2681 LP Monster (NL)
(72) Inventor: PRINS, Vincent, 2681 LP Monster (NL)
(74) Representative: Nederlandsch Octrooibureau

(57) **Abstract**

A device for coupling drive means to a screen profile and a screen assembly, greenhouse or warehouse with such a device. The device comprises a base element with a slider portion for sliding the device through an elongate channel of the screen profile, and a drive means carrier connected to the base element. The slider portion is configured to be inserted into the channel through the elongate channel opening and locked in the channel through a snap fitting connection between the device and the screen profile. The invention further relates to a method for arranging the device in the channel of a screen profile.

## Description

### Technical Field

The invention relates to a device for coupling drive means to a screen profile in a screen assembly for a greenhouse or warehouse, and a screen assembly or greenhouse or warehouse comprising such a device. Furthermore, the invention relates to a method for installing the device.

### Background Art

The application of screen assemblies in greenhouses or warehouses is generally known. Screen assemblies can fulfil various different functions, for example controlling the amount and incidence of light, prevent light emissions, or controlling the climate in the greenhouse by isolating the cultivation space against heat loss or the entry of heat. For these purposes, different types of screen assemblies are known that each are configured to open and close one or multiple screen cloths. The screen cloths may be brought from a folded condition, i.e., an open position, to an unfolded condition, i.e., a closed position, to optimally control the conditions in the greenhouse.

An example of a greenhouse comprising a screen assembly is disclosed in patent document NL 1029362 C2. The screen assembly is attached to a plurality of lattice girders that span an opening between horizontal support beams in a support structure. The screen cloth is configured to unfold between the lattice girders. To that end, the screen cloth is connected to an elongate screen profile that extends substantially perpendicular to the direction of folding and/or unfolding the screen cloth. The elongate screen profile is typically formed by a plurality of interconnected elongate elements of for instance 6 m each, that together form an elongate screen profile of any desired length.

To drive the folding and unfolding of the cloths, the elongate screen profiles are connected to a drive system. The drive system comprises drive means, for instance a drive cable, that extend in a direction substantially perpendicular to the elongate screen profile. The drive means are driven by a motor and guided by a plurality of pulleys to enable the translation of the drive means in a direction substantially perpendicular to the screen profile. A coupling device is provided to couple the drive means to the elongate screen profile and thereby ensure that the elongate screen profile translates with the drive means.

The pulleys of the drive system are usually fixed to horizontal support beams of the support structure, or another element of the support structure. However, the support structure and elongate screen profiles are usually not made of the same material. More precisely, the support structure is usually made of steel, whereas the elongate screen profiles are usually made of aluminium. Consequently, the screen profile has a different thermal expansion than the support structure. In particular, in large greenhouses with long screen profiles, this may lead to a situation wherein the coupling device is no longer precisely aligned with one or more of the pulleys. Consequently, when opening and closing the screen, tension can develop in the drive system.

This problem is known in the art and has traditionally been resolved in two different ways. A first solution is to couple the screen profiles with dilatation sets at terminal sections of the interconnected portions to reduce the expansion and shrinkage. Disadvantageously, however, this increases the number of components in the system, thereby increasing the cost and slowing down the installation process. In addition, this is only a solution for screen assemblies wherein clips, for example stainless steel clip, are connected to an edge of the screen cloth at a predetermined distance from each other, the clips configured to engage the elongate screen profile. In modern systems, such clips are not provided and an edge of the screen cloth is arranged and retained in a chamber of the elongate screen profile. When dilatation sets are provided at the connection between two adjacent screen profiles, this may lead to a situation wherein part of the screen cloth escapes the chamber of the screen profile at the opening between adjacent screen profiles.

An alternative solution is to provide a slidable coupling device that can self-align with the pulleys. The coupling device may be provided with a slider portion that allows the element to 'shift' within a channel in the elongate screen profile. This allows the coupling device to align with the pulleys without creating tension in the drive system. The variable position of the coupling device thereby compensates for expansion and contraction of the profile to end up aligned. Disadvantageously, however, the slider portion makes the assembly of the system tedious, as the slider needs to be inserted from an outer end of the elongate profiles. Typically, this requires inserting the sliders into the channels of the elongate profiles before connecting the different portions of elongate channel to each other. If accidentally a coupling device was forgotten, or would need to be replaced for some reason, the system would need to be disassembled to enter a (new) coupling device into the channel.

It is a goal of the invention to provide a coupling device that is more easily installed and/or differently improves over known coupling devices.

### Summary of Invention

Therefore, according to a first aspect of the invention, there is provided a device for coupling drive means to a screen profile in a screen assembly, the screen profile comprising an elongate channel accessible through an elongate channel opening in the screen profile, the device comprising a base element with a slider portion for sliding the device through the channel of the screen profile, and a drive means carrier connected to the base element. The slider portion of the base element is configured to be inserted into the channel through the elongate channel opening and locked in the channel through a snap fitting connection between the device and the screen profile.

In this context, the term "locked" is used to indicate that the accidental disengagement of the slider portion from the channel is prevented. In the locked condition, the slider may still slide through the channel of the screen profile along a longitudinal direction of the channel. The latter is important, as this allows the coupling device to self-align itself with pulleys of the drive system by sliding through the channel.

Advantageously, the snap fitting connection allows the engagement of the device with the screen profile without inserting it at an outer end of the channel. Consequently, the device does not need to be moved or pushed through the entire elongate profile, or assembled prior to interconnecting different portions of the screen profile, for it to be arranged at the desired position. This is a considerable advantage for the installation of the screen device, specifically when it concerns a large system with a plurality of interconnected screen profiles. Due to the presence of the slider portion, the device may further self-align itself with components of a drive system of the screen assembly.

In an embodiment, the slider portion is inserted into the channel in a first orientation, and rotated towards a second orientation wherein the slider portion is locked through the snap fitting connection. Typically, rotation takes place in a plane parallel to the elongate channel opening. In alternative embodiments, no rotation is required and the snap fitting connection is established by forcing the slider into the channel using a movement along a straight direction. Advantageous to requiring a rotation, is that accidental disengagement is better prevented as the movement to remove the device from the channel requires both a rotation and a pulling force. This is not likely to occur during use of the screen assembly and/or device.

In an embodiment, wherein the snap fitting connection is established by the rotation of the base element from the first to the second orientation. Consequently, locking takes place directly by rotation. Alternatively, the device may first be rotated and then be locked through the snap fitting connection, or vice versa.

In an embodiment, the angle between the first orientation and second orientation is larger than zero and between 0 and 45 degrees, preferably between 5 and 15 degrees. Advantageously, only a relatively small rotation is required such that the device may be fastened using a single rotational movement of a human wrist, without having to move a position of the hand while fastening the device, and without having to use additional tools. Typically, a single hand-movement by a single person is sufficient to engage the device through the snap fitting connection.

In an embodiment, the base element comprises one or more snap fitting features, for example, one or more resilient fingers, for providing the snap fitting connection. The snap fitting features, such as resilient fingers, may be deflected during the installation to provide passage of a portion of the slider through the elongate channel opening. When the slider has been inserted, the resilient fingers can flex back and prevent movement in a direction opposite to the direction for installation. In an embodiment, at least one resilient finger is provided on each side of the elongate channel opening. It will be understood by the skilled person that snap fitting features may also have a different shape than fingers.

In a further embodiment, the snap fitting features are formed separately from the slider portion. Advantageously, the snap fitting features are not used for the sliding. Due to their resilience, the snap fitting features can only transfer forces to a limited extent. Preferably, the slider portion is less resilient than the snap fitting features. Alternatively, the snap fitting features may function as a slider in the locked position.

In an embodiment, the one or more snap fitting features have a notch configured to, in the locked configuration, abut walls of the screen profile forming the channel opening. Advantageously, the notches prevent that the device can rotate back from the position wherein the device can be disengaged from the channel. They thereby prevent the accidental disengagement of the device.

In an embodiment, the slider portion is formed by one or more protruding portions extending from a surface of the base element. Typically, this is an upper surface, referring to the surface that faces upwards when the device is mounted in a screen assembly. The elongate channel opening in the screen profile usually faces downwards, such that the drive system may be provided below the screen profile. Nevertheless, it will be understood that in embodiments, the opening in the screen profile and the drive system may have different orientation.

In an embodiment, the one or more protruding portions comprise a plurality of lateral grooves configured to receive walls of the screen profile forming the channel opening. The channel walls and grooves may thereby control the movement of the slider portion through the channel.

In an embodiment, the slider portion is integrally formed with the base element. The base element is preferably formed through injection molding. Nevertheless, alternative methods, such as additive manufacturing techniques would also suffice.

In an embodiment, the slider portion and/or the base element is made from a plastic material. Advantageously, the skin friction between the slider portion and the aluminium screen profile is relatively low, such that a smooth sliding through the channel is obtained when the screen profile expands or shrinks due to temperature variations. Suitable plastic materials for the base element and the slider portion include for instance Polyoxymethyleen (POM).

In an embodiment, the slider portion is arranged asymmetrically along a middle line of the base element, the middle line in the locked configuration coinciding with a heart line of the elongate channel. The asymmetric positioning of the slider portion with respect to the elongate channel eases the installation of the device through rotation. Here the asymmetric configuration is referred to as a bayonet shape, i.e., a shape that allows a locking of the slider portion through rotation.

In an embodiment, the device further comprises fastening means for fastening the drive means carrier to the base. Preferably, the drive means carrier and base element are formed as separate elements and fastened to each other using fastening means, such as a screw, bolt, pin, pen, or nail.

In a further embodiment, movement of the snap fitting features is prevented in at least a direction required for disengagement when the fastening means are tightened. Consequently, it is not possible to accidentally remove the device from the channel, unless the fastening means are loosened first.

In an embodiment, the drive means carrier comprises a substantially flat plate configured to abut the snap fitting features of the base element, wherein the substantially flat plate abuts the snap fitting features when the fastening means are fastened. Due to the abutment, the substantially flat plate blocks the deflection of the one or more snap fitting features. A snap fitting connection is typically established by the temporary deflection of an element and can sometimes be reversed by the deflection of that same element in the opposite direction. The abutment can thereby prevent the accidental disengagement of the device.

In an embodiment, the fastening means comprise a bolt and nut, preferably wherein the bolt is a hammerhead bolt and/or wherein the nut is a locknut. Here the term "hammerhead bolt" is used to indicate a tiltable bolt, i.e., a bolt which can be inserted in the elongate channel opening through the tilting and/or rotation of the bold. Prior art devices have been made using hammerhead bolts. By including a hammerhead bolt in the device according to the current invention, only a few elements need to be replaced. Nevertheless, it will be understood that other bolts or fastening means may also be used.

Particular advantageous to the use of a locknut is that accidental disengagement of the device is prevented. Nevertheless, normal bolts may also be used.

In an embodiment, the slider portion comprises a receptacle for a head of the bolt configured to lock the bolt in a predefined position. Advantageously, the predefined position may be defined such that the head of the bolt does not interfere with the slide function of the slider portion.

In an embodiment, the drive means carrier comprises a clamping body configured to clamp the drive means. Clamping is an efficient way to engage the drive means.

In an embodiment, the device further comprises a spring element for tensioning the clamping body. The spring element ensures that a sufficiently large clamping force is maintained. In a further embodiment, the fastening means are used to place the spring element under tension.

According to a second aspect of the invention and in accordance with the advantages and effects of the invention as described herein above, there is provided a base element suitable for use in the device according to any of the preceding claims, the base element comprising a slider portion for sliding the device through the channel of the screen profile, wherein the slider portion is configured to be inserted into the channel through the elongate channel opening and to be locked in the channel by a snap fitting connection; and an opening through the base element for receiving a fastening element for connecting the base element to a drive means carrier.

Advantageously, a separate base element may be used and combined with the drive carrier means and/or fastening element of an existing device to provide a coupling device according to the invention. Advantageously, for the production only new base elements need to be produced, whereas existing manufacturing processes may be used for the other components, for example for the drive means carrier.

According to another aspect of the invention and in accordance with the advantages and effects of the invention as described herein above, there is provided a method for installing a coupling device comprising: arranging a coupling device according to the invention at an angle with respect to the elongate channel of a screen profile; and providing an upward pressure combined with a rotational movement of the device to snap the slider portion of the device into the channel and connect the device to the channel at an intermediate channel position. Here the term "intermediate channel position" refers to a position along the channel away from the outer ends of the channel.

In an embodiment, the method further comprises inserting the drive means in the drive means carrier; and fastening the drive means carrier to the base plate to prevent the drive means from accidentally disengaging.

According to yet another aspect of the invention and in accordance with the advantages and effects of the invention as described herein above, there is provided a screen assembly comprising an elongate screen profile with a screen cloth connected thereto; a drive system for driving the opening and closure of the screen cloth; and a coupling device according to the invention coupling the drive system to the elongate screen profile.

According to yet another aspect of the invention and in accordance with the advantages and effects of the invention as described herein above, there is provided a greenhouse or warehouse with a screen assembly according to the invention.

### Brief Description of Drawings

Embodiments will now be described, by way of example only, with reference to the accompanying schematic drawings in which corresponding reference symbols indicate corresponding parts. In the drawings, like numerals designate like elements. Multiple instances of an element may each include separate letters appended to the reference number. For example, two instances of a particular element "20" may be labeled as "20a" and "20b". The reference number may be used without an appended letter (e.g. "20") to generally refer to an unspecified instance or to all instances of that element, while the reference number will include an appended letter (e.g. "20a") to refer to a specific instance of the element.
Figure 1A schematically shows a front view of part of a screen assembly according to a first embodiment.
Figure 1B shows a side view of the embodiment in Fig. 1A.
Figure 2 presents a perspective view of a first embodiment of a device according to the invention.
Figure 3A shows a top view of the base element of the device according to the first embodiment in Fig. 2.
Figure 3B shows a front view of the base element in Fig. 3A.
Figures 4A-4F illustrate a method for locking the device according to the first embodiment in the channel of a screen profile. Figures 4A, 4C and 4E present front views. Figures 4B, 4D and 4F show cross-sectional top views.

The figures are meant for illustrative purposes only, and do not serve as restriction of the scope or the protection as laid down by the claims.

### Description of Embodiments

The following is a description of certain embodiments of the invention, given by way of example only and with reference to the figures.

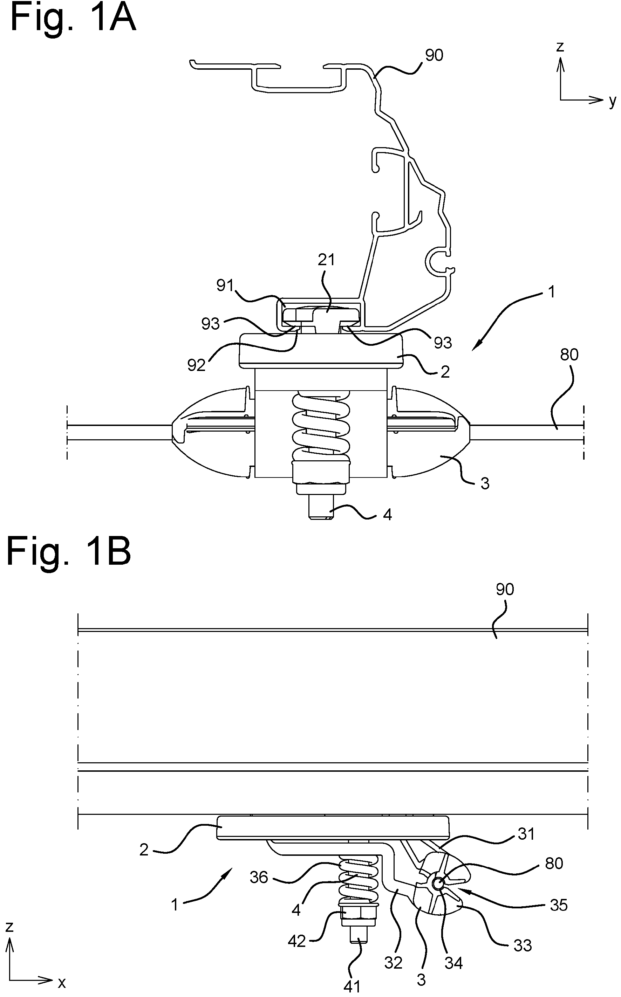

Figure 1A schematically shows a front view of a device 1 for coupling drive means 80 to a screen profile 90 in a screen assembly.

The screen profile 90 has an elongate channel 91 with two lower channel walls 93 that extend in a longitudinal direction X. An elongate channel opening 92 faces downwards and is defined between the two channel walls 93. The device 1 has a base element 2, a drive means carrier 3, and fastening means 4. The base element 2 comprises a slider portion 21 for sliding the device 1 through the channel 92. The drive means carrier 3 is connected to the base element 2 through the fastening means 4.

The screen profile 90 is typically formed by a plurality of interconnected elongate screen profile portions. Each elongate screen profile portion has first and second portion ends that are spaced from each other along the longitudinal axis X. The ends of adjacent portions are interconnected to each other, for instance with a screen profile connector piece, to form one continuing elongate screen profile 90. The channel 91 thus extends throughout a plurality of screen profile portions. The channel 90 and channel opening 91 may be uninterrupted over their full length or may, for instance due to the presence of the screen profile connector piece, comprise local interruptions.

The device 1 has been inserted into the channel 91 through the elongate channel opening 92 and has been locked in the channel 91. In this context, the term "locking" refers to the situation wherein the accidental disengagement of the device 1 from the channel 91 is prevented. The device 1 may slide through the channel 91 and around the channel walls 93 to align with other elements of the screen assembly, such as pulley wheels of a drive system that guide the drive means 80.

Advantageous to the device 1 is that it is shaped in a way that allows the engagement of the device 1 to a screen profile 90 at an intermediate channel position. In this context, the engagement at an "intermediate position" means that the device 1 can be inserted into the channel and engaged to the channel at a plurality of different positions along the longitudinal axis X through the elongate channel opening 92 and spaced from the first and second channel ends, or the respective first and second portion ends.

The drive means 80 extend in a transverse direction Y substantially perpendicular to the longitudinal direction X wherein the elongate channel 91 extends. In the depicted embodiment, the drive means 80 are provided by a steel wire cable. However, it will be understood by the skilled person that the device 1 may be adjusted to be coupled to alternative drive means, such as for instance to a chain or belt.

Fig. 1B shows a side view of the arrangement in Figure 1A. The drive means carrier 3 comprises a first clamping member 31, second clamping member 32, a drive means holder 33 with a receptacle 34 for the drive means 80 and an expandable opening 35 for inserting the drive means 80 into the receptacle 34. A spring element 36 is arranged to clamp the first and second clamping members 31,32 together and close the expandable opening 35. The drive means holder 33 is made of a plastic material.

The fastening means 4 comprise a hammerhead bolt 41, and a locknut 42. When the nut 42 is fastened, it tensions the spring element 36 that is arranged between the nut 42 and the clamping members 31,32. The spring element 36 presses the clamping members 31,32 together, thereby closing the expandable opening 35 of the drive means holder 33 and clamping the drive means 80.

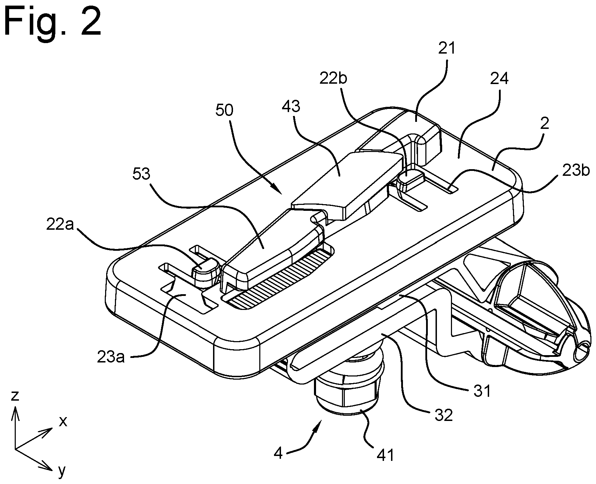

Figure 2 shows a perspective view of the device 1 according to the embodiment in Fig. 1A-1B. In the depicted view, the device 1 is not mounted in a screen profile 90, but it has been pre-assembled to accelerate the installation process. The base element 2 is formed as a substantially flat plate having a main upper surface 24 with a protruding slider portion 21, a pair of resilient fingers 22a, 22b, and a plurality of recesses 23a, 23b.

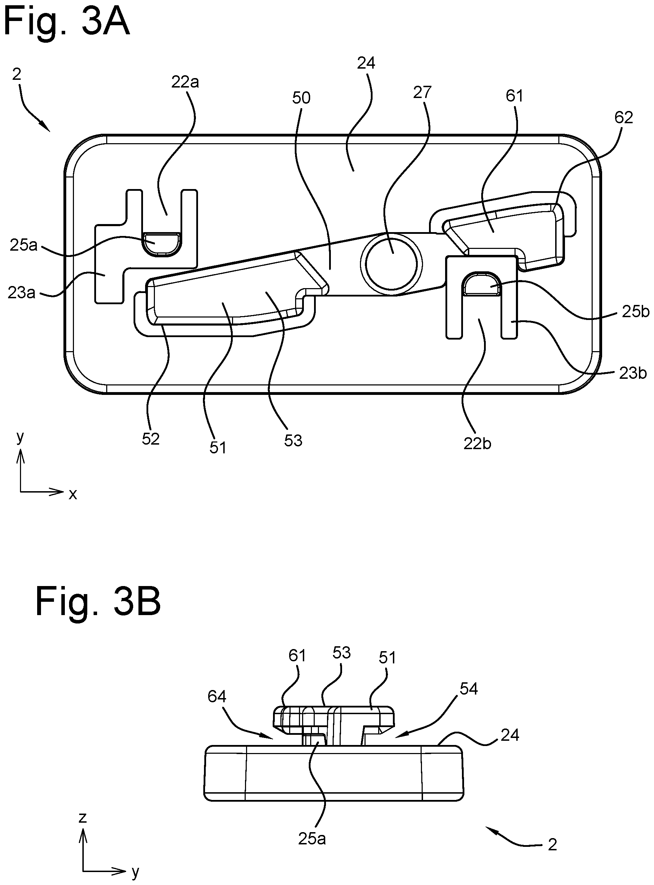

The slider portion 21 is arranged asymmetrically with respect to the fastening means 4, thereby facilitating its insertion in the channel through the elongate channel opening. The slider portion 21 further comprises an opening 27 (see Fig. 3A) for receiving the bolt 41, and a recessed portion 50 for receiving the head 43 of the hammerhead bolt 41. This recessed portion 50 is configured such that a top surface of the bolt head 43 aligns with a top surface 53 of the slider portion 21.

The first and second clamping members 31,32 extend substantially parallel to the substantially flat plate of the base element 2. In particular, the first clamping member 31 extends in parallel to a surface of the base element 2 and abuts a surface of the resilient fingers 22a, 22b to prevent their deflection in a direction that would facilitate disengagement of the device 1 from the channel 92.

This is important because the drive means receptacle 34, which is at the position where the drive means carrier 3 engages with the drive means 80, is typically not vertically aligned with a main axis of the bolt 41. Consequently, when the drive means 80 are activated to open or close the screen cloth, a force moment occurs around the main axis of the hammerhead bolt 41. This could possibly lead to a disengagement of the device 1 if the resilient fingers 22a, 22b would have freedom to deflect. By arranging a surface of the base element 2 to abut the resilient fingers 22a, 22b, their deflection is prohibited, preventing accidental disengagement of the device 1.

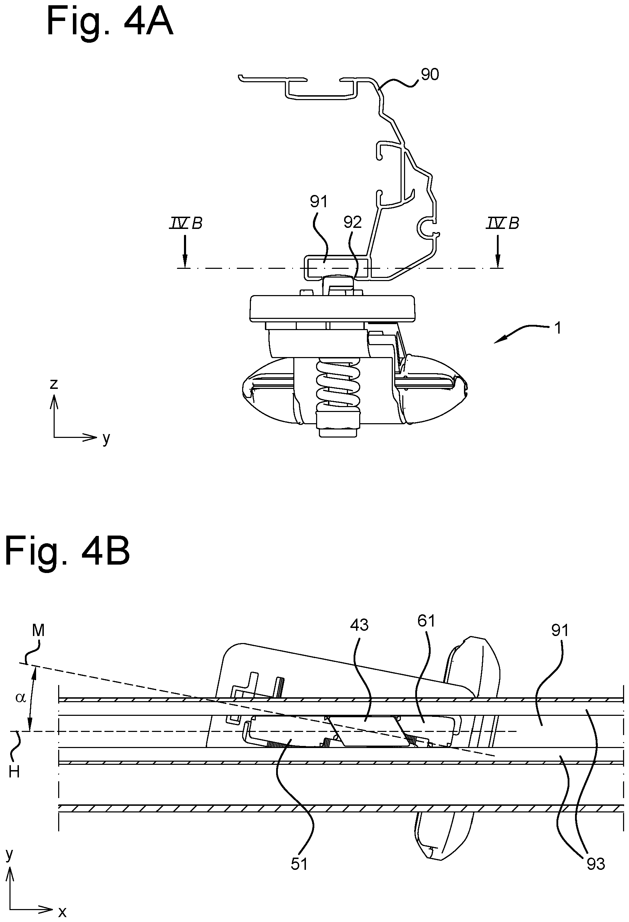

Figure 3A shows a top view of the base element 2 in Fig. 2. The recesses 23a, 23b include a U-shaped form and are arranged around the resilient fingers 22a, 22b. The resilient fingers 22a, 22b are each provided with a notch 25a, 25b to provide a snap fitting connection. The resilient fingers 22a, 22b, can be pushed down when mounting the device 1, whereafter the notches 25a, 25b secure the device 1 in place. This will be explained in detail with reference to Fig. 4A-F below.

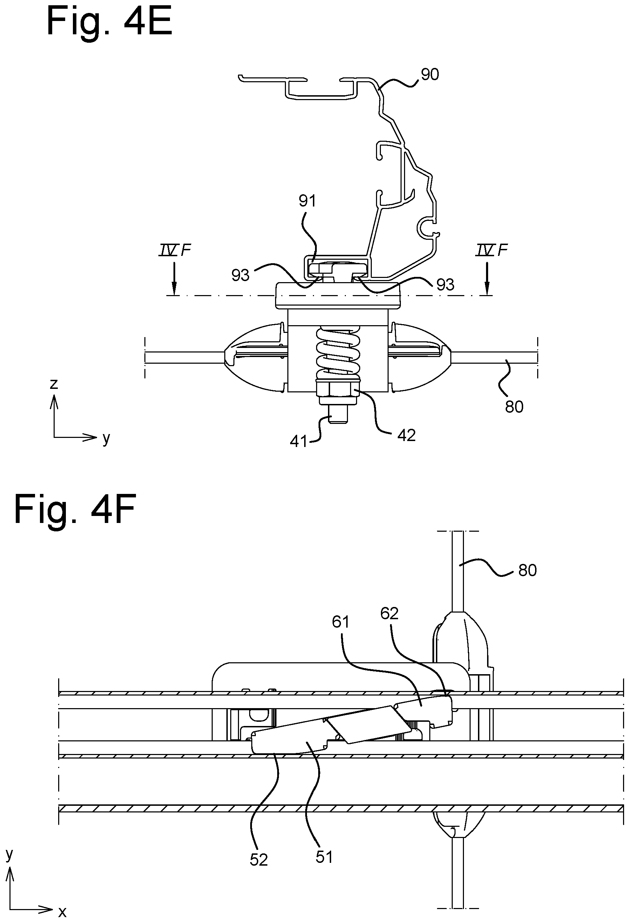

The protruding slider portion 21 comprises a first slider part 51, a second slider part 61, a first abutment surface 52, and a second abutment surface 62 for abutting a wall in the chamber of the elongate profile 90 (see Fig. 4F). The first and second abutment surfaces 52, 62 do not continue over the full length of the slider 21 but are instead spaced from each other along the longitudinal direction X (when the device is engaged in a channel). They thereby enable the insertion of the base element 2 through rotation and snap fitting. The slider portions 51, 61 have a bayonet shape, which is considered to include any shape that allows a locking of the slider 21 through rotation. The abutment surfaces 52, 62 are not flat but are provided with a self-seeking edge, which eases the fastening of the bayonet lock through rotation.

Figure 3B shows a front view of the base element 2 in Figures 2 and 3A. A first groove 54 is formed between the first slider portion 51 and the main surface 24 of the base element 2. Likewise, a second groove 64 is formed between the second slider portion 52 and the main surface 24 of the base element 2. The grooves 54, 64 provide space for the channel walls 93 of the screen profile 90 and allow the base element 2 to slide through the channel 91.

Figures 4A-4F illustrate a method for connecting the device 1 to the screen profile 90 by inserting it in its channel 91. Figure 4A shows the first step of a method for connecting the device 1. The device 1, in a pre-assembled form, is arranged adjacent to the elongate channel opening 92 of the screen profile 90. The device 1 is arranged in a first orientation, as best shown in the cross-sectional top view in Fig. 4B. In the first orientation, a middle line M of the base element 2 makes an angle α with a heart line H of the elongate channel 91. The angle α is approximately 15 degrees. At this angle, the device 1, and in particular the slider parts 51, 61 of the slider portion 21, fit through the elongate opening 92 that provides access to the channel 91. In addition, the head 43 of the hammerhead bolt fits through the elongate opening 92 in this position.

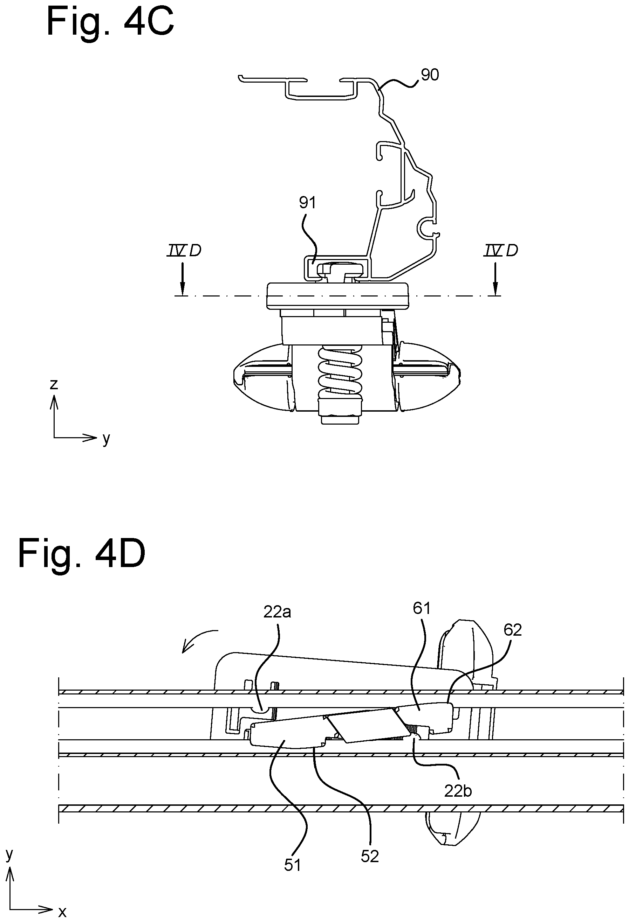

Figures 4C and 4D illustrate a second step of the method. The device 1 is rotated from the first orientation to a second orientation while applying a modest upward pressure onto the device 1. In the second orientation, the middle line M of the base element 2 coincides with the heart line H of the elongate channel 91. By rotating the device 1, the resilient fingers 22a, 22b are pushed against the channel walls 93 during the rotation. Once the notches 25a, 25b snap into the channel 91, the rotation of the base element 2 in the opposite direction is prevented and the device 1 is locked in place.

After this second step, the fastening means 4 are not fastened yet. Before tightening the fastening means 4, the expandable opening 35 of the drive means holder 33 is bent open in order for the drive means 80 to be inserted.

Figures 4E and 4F show a third step of the method, which takes after the drive means 80 have been inserted in the drive means carrier. In this step, the locknut 42 on the hammerhead bolt 41 is tightened, thereby forcing the clamping member 31 and the base element 2 together. The spring element 36 is provided between the clamping members 32 and the nut 42. Fastening of the nut 42 thereby also activates the spring element 36 and actively clamps the clamping members 31,32 together. Consequently, the expandable opening 35 closes and the drive means holder 33 of the drive means carrier 3 tightly clamps the drive means 80.

Due to the clamping of the base element 2 to the clamping member, the resilient fingers 22a, 22b are blocked from any movement in the vertical direction. This prevents their accidental disengagement by snapping out of the channel 92 if enough force where to be applied. However, once the nut would be loosened, such disengagement is possible again, thereby providing a way for a relatively easy removal of the device 1 from the channel 91. This is a further advantage over current devices that can slide through channel, as such devices typically cannot be removed easily after their installation.

The base element 2 including the slider portion 21 is made of Polyoxymethyleen (POM), which advantageously has a very low friction coefficient, at least significantly lower as for instance the aluminum of which the remainder of the device 1 is made. The screen profile 90 is made of aluminum.

The present invention may be embodied in other specific forms without departing from its spirit or essential characteristics. The described embodiments are to be considered in all respects only as illustrative and not restrictive. The scope of the invention is, therefore, indicated by the appended claims rather than by the foregoing description. It will be apparent to the person skilled in the art that alternative and equivalent embodiments of the invention can be conceived and reduced to practice. All changes which come within the meaning and range of equivalency of the claims are to be embraced within their scope.

## Claims

1. A device for coupling drive means to a screen profile in a screen assembly, the screen profile comprising an elongate channel accessible through an elongate channel opening in the screen profile, the device comprising:
a base element with a slider portion for sliding the device through the channel of the screen profile, and
a drive means carrier connected to the base element,
wherein the slider portion is configured to be inserted into the channel through the elongate channel opening and locked in the channel through a snap fitting connection between the device and the screen profile.

2. The device according to claim 1, wherein the slider portion is inserted into the channel in a first orientation, and rotated towards a second orientation wherein the slider portion is locked through the snap fitting connection, preferably wherein the angle between the first orientation and second orientation is larger than zero and between 0 and 45 degrees, more preferably between 5 and 15 degrees.

3. The device according to any of the preceding claims, wherein the base element comprises one or more snap fitting features, for example, one or more resilient fingers, for providing the snap fitting connection, preferably wherein the one or more snap fitting features are formed separately from the slider portion.

4. The device according to claim 3, wherein the one or more snap fitting features have a notch configured to, in the locked configuration, abut walls of the screen profile forming the channel opening.

5. The device according to any of the preceding claims, wherein the slider portion is formed by one or more protruding portions extending from a surface of the base element, preferably wherein the one or more protruding portions comprise a plurality of lateral grooves configured to receive walls of the screen profile forming the channel opening, optionally wherein the slider portion is integrally formed with the base element.

6. The device according to any of the preceding claims, wherein the slider portion and/or the entire base element is made from a plastic material.

7. The device according to any of the preceding claims, wherein the slider portion is arranged asymmetrically along a middle line of the base element, the middle line in the locked configuration coinciding with a heart line of the elongate channel.

8. The device according to any of the preceding claims, wherein the device further comprises fastening means for fastening the drive means carrier to the base element, preferably wherein the fastening means comprise a bolt and nut, more preferably wherein the bolt is a hammerhead bolt and/or wherein the nut is a locknut.

9. The device according to claim 8 and at least dependent on claim 3, wherein movement of the snap fitting features is prevented in at least a direction required for disengagement, when the fastening means are tightened, and/or wherein the drive means carrier comprises a substantially flat plate configured to abut the snap fitting features of the base element, wherein the substantially flat plate abuts the snap fitting features when the fastening means are fastened.

10. The device according to any of the preceding claims, wherein the drive means carrier comprises a clamping body configured to clamp the drive means, preferably wherein the device further comprises a spring element for tensioning the clamping body.

11. A base element suitable for use in the device according to any of the preceding claims, the base element comprising
a slider portion for sliding the device through the channel of the screen profile, wherein the slider portion is configured to be inserted into the channel through the elongate channel opening and to be locked in the channel by a snap fitting connection; and
an opening through the base element for receiving a fastening element for connecting the base element to a drive means carrier.

12. A method for installing a coupling device comprising:
- arranging a coupling device according to any of claims 1-10 at an angle with respect to the elongate channel of a screen profile;
- providing an upward pressure combined with a rotational movement of the device to snap the slider portion of the device into the channel and connect the device to the channel at an intermediate channel position.

13. The method according to claim 12, further comprising:
- inserting the drive means in the drive means carrier; and
- fastening the drive means carrier to the base plate to prevent the drive means from accidentally disengaging.

14. A screen assembly comprising
an elongate screen profile with a screen cloth connected thereto;
a drive system for driving the opening and closure of the screen cloth; and
a device according to any of claims 1-10 coupling the drive system to the elongate screen profile.

15. A greenhouse or warehouse comprising a screen assembly according to claim 14.
